# EUROPÄISCHE PATENTSCHRIFT

(11) **EP 0 857 544 B1**
(45) Veröffentlichungstag und Bekanntmachung des Hinweises auf die Patenterteilung: **24.03.2004**
(21) Anmeldenummer: 98101343.6
(22) Anmeldetag: 27.01.1998
(51) Int. Cl.: B25B 1/24

(54) **Haltevorrichtung für Werkstücke**
Clamping device for workpieces
Dispositif de serrage pour pièces à travailler

(30) Priorität: 27.01.1997 DE 19702848; 23.01.1998 DE 19802320
(43) Veröffentlichungstag der Anmeldung: 12.08.1998
(73) Patentinhaber: Matrix GmbH, Spannsysteme und Produktionsautomatisierung, 70327 Stuttgart (DE)
(72) Erfinder: Meintrup, Hubert W., 70327 Stuttgart (DE); Schwock, Stefan, 70567 Stuttgart (DE)
(74) Vertreter: Patentanwälte Rehberg + Hüppe

(56) Entgegenhaltungen:
- DE-A- 1 929 830
- DE-A- 3 011 267
- DE-A- 4 239 180
- DE-A- 4 339 102
- GB-A- 767 334
- US-A- 2 754 708
- US-A- 4 752 063
- US-A- 5 407 185
- YOUCEF-TOUMI K ET AL: "DESIGN AND IMPLEMENTATION OF ROBOT-OPERATED ADAPTABLE AND MODULAR FIXTURES" ROBOTICS AND COMPUTER INTEGRATED MANUFACTURING, Bd. 5, Nr. 4, 1989, Seiten 343-356, XP000035644

## Beschreibung

Die Erfindung bezieht sich auf eine Haltevorrichtung für Werkstücke nach dem Oberbegriff des Patentanspruchs 1. Solche Haltevorrichtungen sind für Werkstücke mit unebenen Oberflächen vorgesehen.

Eine Vorrichtung nach dem Oberbegriff des Anspruchs 1 ist aus der US-A-5 407 185 bekannt. Der Druckraum dieser Vorrichtung ist für ein Druckgas vorgesehen. Ein zwischen den Spannstiften vorgesehener Luftspalt ist klein groß genug, um die nichtfixierten Spannstifte unabhängig voneinander zu verschieben, und klein genug, um die Fixierung der Spannstifte aneinander zu ermöglichen. Durch den Luftspalt kann außerdem ein Druck des Druckgases in dem Druckraum abgebaut werden, wobei der Gasstrom zudem Verunreinigungen zwischen den Spannstiften entfernt. Die an dem Werkstück zur Anlage kommenden Spitzen der Spannstifte sind in ihrem Durchmesser reduziert und treten vor dem Werkstück durch Ausnehmungen in einer Abschirmplatte hindurch, die Verunreinigungen von Seiten des Werkstücks zurückhalten soll.

Eine Haltevorrichtung jedoch ohne einen einen Druckraum an der dem Werkstück abgewandten Rückseite der Spannstifte, ist aus der AU 117 458 bekannt. Die Spannstifte füllen mit ihren kreisförmigen Querschnitten den Rahmen nicht lückenlos aus. In der Nachbarschaft jedes Spannstifts sind mehrere Freiräume angeordnet. Im fixierten Zustand liegen die Spannstifte linienförmig aneinander an. Verunreinigungen, die zwischen die Spannstifte eindringen, werden bei dieser Anordnung mit einsetzender Fixierkraft in die Freiräume zwischen den Spannstiften verdrängt. Die Verunreinigungen behindern so das Fixieren sämtlicher Spannstifte gegenüber dem Rahmen durch die Fixierkraft solange nicht, wie sie von den Freiräumen aufgenommen werden können. Für einen ausreichenden Kraftschluß zwischen den Spannstiften ist der nur linienförmige Kontakt der Spannstifte unkritisch. Im Gegenteil können durch die dabei auftretenden größeren Drücke elastische Verformungen der Spannstifte auftreten, die die Fixierung der Spannstifte gegenüber dem Rahmen durch eine Art Formschluß unterstützen. Die Spannstifte mit dem kreisförmigen Querschnitt sind zudem leicht herstellbar, beispielsweise durch Ablängen entsprechender Stangen aus Rundstahl. Die Fixiereinrichtung der bekannten Haltevorrichtung beaufschlagt eine Wand des rechteckig ausgebildeten Rahmens, die gegenüber den anderen Wänden des Rahmens verschieblich ist, mit der senkrecht zu der Haupterstreckungsrichtung der Spannstifte gerichtete Fixierkraft. Die Fixierkraft wird dabei über eine sich an den anderen Wänden des Rahmens abstützende Fixierschraube aufgebracht. Die Vorschubeinrichtung für den Spannbacken weist eine durch eine Gewindebohrung in dem Spannbacken hindurchtretende und ortsfest, aber verdrehbar gelagerte Spindel auf.

Haltevorrichtungen für Werkstücke, die bis auf einen fehlenden Druckraum und einen sechseckigen Querschnitt der Spannstifte dem Oberbegriff des Anspruchs 1 entsprechen, sind aus der US 2 754 708 bekannt. Die Spannstifte sind so in den Rahmen gepackt, daß sie den Rahmen lückenlos ausfüllen, wenn man von den Randbereichen der Packung absieht. Verspannt werden die Spannstifte in dem Rahmen auch hier mit Hilfe einer durch eine Fixierschraube beaufschlagten, verschieblichen Wand des Rahmens. Die Spannstifte sind rückwärtig mit Rückhaltestangen verbunden, die durch eine durchbohrte Rückhalteplatte hindurchtreten und dahinter mit einem Rückhaltebund versehen sind. Auf den Rückhaltestangen sind Druckfedern angeordnet, die die Spannstifte gegenüber der Rückhalteplatte nach vorn auf das Werkstück hin beaufschlagen. Die Vorschubeinrichtung für den Spannbacken weist auch hier eine durch eine Gewindebohrung in dem Spannbacken hindurchtretende und ortsfest aber verdrehbar gelagerte Spindel auf. Bei der tatsächlichen Verwendung der aus der US 2 754 708 bekannten Haltevorrichtung stellt sich heraus, daß diese sehr empfindlich auf Verunreinigungen reagiert. Wenn irgendwelche Verunreinigungen zwischen die einzelnen Spannstifte eindringen, wirkt die seitliche Fixierkraft nicht mehr auf alle Spannstifte, sondern sie wird nur über bestimmte Spannstifte abgetragen. Im Ergebnis werden einzelne Spannstifte oder ganze Bereiche von Spannstiften nicht durch die seitliche Fixierkraft gegenüber dem Rahmen fixiert.

Aus der GB 595 803 ist eine Haltevorrichtung mit zwei Spannbacken bekannt, die horizontal in einzelne Spannelemente unterteilt sind. Hinter den Spannelementen sind mit Öldruck beaufschlagbare Druckräume vorgesehen. Der in den Druckräumen herrschende Druck drückt die einzelnen Spannelemente vor und stützt sie ab. Die Druckräume der beiden Spannbacken des aus der GB 595 803 bekannten Schraubstocks sind miteinander verbunden. Eine Verfahrbarkeit der Spannbacken gegeneinander ist nicht vorgesehen. Zum Einspannen eines Werkstücks wird vielmehr ausschließlich Druck auf die miteinander kommunizierenden, aber grundsätzlich geschlossenen Druckräume gegeben. Hierdurch wird jedoch keine definierte Lage des in dem Schraubstock gehaltenen Werkstücks erreicht, weil bei einem Verschieben des Werkstücks in der Spannrichtung des Schraubstocks keine Druckerhöhung in den Druckräumen als reactio auftritt. Vielmehr wird aus der einen Druckkammer genau soviel Öl verdrängt, wie in die andere Druckkammer nachströmen kann. Dasselbe gilt für ein Verdrehen des Werkstücks in der Ebene, in der die einzelnen Spannelemente der beiden Spannbacken nebeneinander angeordnet sind.

Haltevorrichtungen für Werkstücke, mit mehreren parallel zueinander ausgerichteten und in ihrer Haupterstreckungsrichtung einzeln verschiebbaren Spannelementen sind auch aus der DE-PS-19 29 830, der DE 42 39 180 A1 und der DE 39 27 773 A1 bekannt.

Aus der US 4 200 272 ist eine Haltevorrichtung für Werkstücke, mit einer horizontalen Werkstückauflage, die in eine Vielzahl von im Querschnitt kreisförmigen, parallel zueinander ausgerichteten, seitlich beabstandeten und in ihrer Haupterstreckungsrichtung einzeln verschiebbaren Stützstiften aufgteilt ist. Ein Rahmen umgreift die Stützstifte seitlich, und eine Fixiereinrichtungen ist zum Fixieren jedes einzelnen Stützstifts durch seitliche Fixierkräfte gegenüber dem Rahmen vorgesehen. Die Stützstifte treten in dem Rahmen durch einen Druckraum hindurch. Dabei wird der Druckraum in der Haupterstreckungsrichtung der Spannstifte durch zwei horizontal verlaufende, mit Aussparungen für die Stützstifte versehene Platten begrenzt. Die Stützstifte treten durch die Aussparungen in den Platten mit Spiel hindurch, so daß Druckluft aus dem Druckraum ringförmige Druckkissen zwischen den Platten und den Stützstiften ausbildet, die ein Verschieben der Stützstifte gegenüber den Platten erleichtert. Der nach oben gerichtete Teil der Druckluft tritt zwischen die über die obere Platte überstehenden Stützstifte aus. Dieser Teil der Druckluft ist vorgesehen, um Verunreinigungen, die von dem Werkstück aus von oben zwischen die Stützstifte gelangt sind, zu beseitigen. Die Fixiereinrichtung für die Stützstifte fixiert jeden Stützstift einzeln durch seitliches Verklemmen gegenüber einer weiteren mit dem Rahmen verbundenen und mit einer Aussparung für jeden Stützstifte versehenen Platte. Für das Vorschieben jedes Stützstifts nach oben ist eine um den Stützstift herum angeordnete Druckfeder vorgesehen, die sich an der weitern Platte abstützt.

Der Erfindung liegt die Aufgabe zugrunde, eine gegenüber dem Stand der Technik verbesserte Haltevorrichtung nach dem Oberbegriff des Patentanspruchs 1 aufzuzeigen.

Erfindungsgemäß wird diese Aufgabe durch die Merkmale des Patentanspruchs 1 gelöst.

Vorteilhafte Ausführungsformen der Erfindung sind in den Unteransprüchen beschrieben.

Das über die Freiräume austretende Druckmedium verhindert das Eindringen von Verunreinigungen zwischen die Spannstifte. Wenn es sich bei dem Druckmedium um Druckluft handelt, liegt ein sogenanntes Sperrluftsystem vor. Die Reinigungswirkung des aus dem offenen Druckraum austretenden Druckmediums ist nicht nur bei fixierten Spannstiften, sondern auch bei aufgehobener Fixierung der Spannstifte aneinander gegeben. Mit dem durch die Freiräume zwischen den Spannstiften auf das Werkstück hin austretenden Druckmedium ist zudem eine Kühlung des Werkstücks bei einer wärmefreisetzenden Bearbeitung möglich. Zur maximalen Ausnutzung dieses Effekts kann als Druckmedium ein Kühlmittel eingesetzt werden.

Das Ausfahren der Spannstifte, das heißt das Anlegen der Spannstifte an das Werkstück in deren unfixierten Zustand kann durch eine Hydraulik bzw. Pneumatik unter Ausnutzung des Druckmediums in dem Druckraum erfolgen. Durch das Fixieren der Spannstifte in dem Rahmen mittels der seitlichen Fixierkraft ist es unschädlich, wenn sämtliche Spannstifte bei einer Hydraulik oder Pneumatik über einen gemeinsamen Druckraum beaufschlagt werden. Der Druckraum hat nach dem Fixieren der Spannstifte mit der Fixierkraft keinen Einfluß mehr auf die Relativlage der Spannstifte gegenüber dem Rahmen.

Vorzugsweise sind die Spannstifte aus handelsüblichen, zu günstigen Kosten verfügbaren Zylinderstiften mit rückwärtigen Gewindebohrungen ausgebildet. Soweit handelsübliche Zylinderstifte in einzelnen Bearbeitungsschritten einer Formgebung unterworfen werden, die für die erfindungsgemäßen Spannstifte nicht erforderlich ist, sollten diese Formgebungsschritte zur Kostenersparnis weggelassen werden.

Wie im Stand der Technik ist der Rahmen bei der Erfindung vorzugsweise rechteckig. Grundsätzlich sind aber auch runde oder ellipsenförmige Rahmen möglich.

In den Rahmen können die Spannstifte mit rundem Querschnitt in einer dichtesten Packung angeordnet sein. Diese Anordnung ist bezüglich der erreichbaren Fixierung der Spannstifte in deren Haupterstreckungsrichtung im Vergleich zu einer quadratischen Packung bevorzugt.

Bei einer quadratischen Packung der Spannstifte sind die Freiräume zwischen den Spannstiften besonders groß. Es ist möglich, diese Freiräume durch Füllstifte in gewissem Umfang aufzufüllen. Die Füllstifte weisen dabei ebenfalls einen kreisförmigen Querschnitt, aber einen geringeren Durchmesser als die Spannstifte auf. Der geringere Durchmesser ist dabei so zu wählen, daß keine nennenswerten seitlichen Kräfte zwischen zwei benachbarten Reihen von Spannstiften auftreten. Außerdem können die Füllstifte kürzer als die Spannstifte sein, so daß sie normalerweise nicht am Halten des jeweiligen Werkstücks beteiligt sind. Sie dienen dann ausschließlich zur Begrenzung des zwischen benachbarten Spannstiften verbleibenden Freiraums.

Das gemeinsame translatorische Betätigungselement für die Fixiereinrichtung und die Vorschubeinrichtung dient sowohl zum Vorschieben des Spannbackens auf das jeweilige Werkstück hin als auch zum Fixieren der Spannstifte aneinander, sobald sie sich an das Werkstück angelegt haben und damit dem weiteren Vorschieben des Spannbackens ein erhöhter Widerstand entgegenwirkt. In gewissem Umfang werden die Spannstifte über die Getriebemittel von dem Betätigungselement auch schon beim Vorschieben des Spannbackens seitlich zusammengedrückt. Die dabei auftretende seitliche Kraft, die unterhalb der Fixierkraft liegt, ist aber nicht nachteilig, vielmehr beseitigt sie jedes seitliche Spiel der Spannstifte, so daß diese nicht in seitlicher Richtung gegenüber dem Werkstück verschoben werden, womit die Gefahr einer Beschädigung des Werkstücks verbunden wäre. Das gemeinsame translatorische Betätigungselement für die Fixiereinrichtung und die Vorschubeinrichtung ergibt einen extrem einfachen Aufbau auch für eine Steuerung der neuen Haltevorrichtung.

Die Getriebemittel sind vorzugsweise so ausgebildet, daß die Fixierkraft auf die Spannstifte größer ist als die Spannkraft auf den Spannbacken. Dies ist von Bedeutung, sobald die Anlage der Spannstifte an dem Werkstück erreicht ist, weil erst dann eine Reaktion zu der Spannkraft gegeben ist.

Als Getriebemittel sind beispielsweise schräg zu dem translatorischen Betätigungselement ausgerichtete Gleitflächen geeignet, über die das in Richtung der Spannkraft ausgerichtete translatorischen Betätigungselement auf ein Druckstück der Fixiereinrichtung einwirkt. Ebenso ist die Ausbildung der Getriebemittel durch einen oder mehrere schräg zu dem translatorischen Betätigungselement ausgerichtete Lenkerarme möglich, die an das translatorische Betätigungselement und das Druckstück der Fixiereinrichtung angelenkt sind.

Besonders bevorzugt sind bei der neuen Haltevorrichtung Ausführungsformen, bei denen der Spannbacken in zwei symmetrisch zu dem translatorischen Betätigungselement angeordnete Teilbacken mit jeweils einem die Spannstifte seitlich umgreifenden Rahmen unterteilt ist. Die für die beiden Spannbacken erforderlichen Fixierkräfte verlaufen dann in entgegengesetzten Richtungen und heben sich gegeneinander auf, statt daß eine Abstützung des translatorischen Betätigungselements in seitlicher Richtung erforderlich ist.

Das Druckstück der Fixiereinrichtung wirkt vorzugsweise auf eine Wand des die Spannstifte umgebenden Rahmens ein, die gegenüber dem restlichen Rahmen verschieblich ist.

Zur Anpassung an Werkstücke mit extremen Formgebungen, das heißt mit Formgebungen, die einen stark unterschiedlichen Abstand zu der von dem Halterahmen definierten Ebene aufweisen, ist es sinnvoll, wenn die Spannstifte einzeln gegen Spannstifte anderer Länge austauschbar sind. So müssen die Spannstifte nicht die gesamten Abstandsunterschiede durch Relativverschiebungen zueinander überbrücken, wobei die über den gesamten Halterahmen durchgängigen Kontaktbereiche der Spannstifte aneinander immer kleiner werden.

Mindestens einem der Spannstifte kann eine Positioniereinrichtung oder ein Wegaufnehmer zugeordnet sein, um beispielsweise die Relativlage eines Werkstücks gegenüber dem Rahmen zu erfassen oder ein Maß für die Ausnutzung der Verschiebbarkeit der Spannstifte gegenüber dem Rahmen zu gewinnen.

Aus Gewichtsgründen kann es von Vorteil sein, die Spannstifte der Haltevorrichtung nicht aus Metall, sondern beispielsweise aus einem harten Kunststoff auszubilden. Ansonsten ist Kunststoff beispielsweise geeignet, die Spitzen metallischer Spannstifte auszubilden, um Beschädigung einer besonders empfindlichen Oberfläche eines Werkstücks zu vermeiden. Hierbei kommen jedoch vorzugsweise leicht verformbare Kunststoffe zur Anwendung. Die Spitzen der Spannstifte können auch mit Elektromagneten oder Vakuumsaugern zum Aufbringen zusätzlicher Haltekräfte auf das jeweilige Werkstück versehen sein.

Die Erfindung wird im folgenden anhand von Ausführungsbeispielen näher erläutert und beschrieben. Dabei zeigt:
- Figur 1: eine Draufsicht auf einen Spannbacken der erfindungsgemäßen Haltevorrichtung mit Spannstiften in quadratischer Packung,
- Figur 2: die Packung der Spannstifte bei dem Spannbacken gemäß Figur 1 in vergrößerter Darstellung,
- Figur 3: eine abgewandelte Packung der Spannstifte mit zusätzlichen Füllstiften in einer Figur 2 entsprechenden Darstellung,
- Figur 4: eine Draufsicht auf einen Spannbacken der erfindungsgemäßen Haltevorrichtung mit Spannstiften in dichtester Packung,
- Figur 5: die Packung der Spannstifte bei dem Spannbacken gemäß Figur 4 in vergrößerter Darstellung,
- Figur 6: einen Querschnitt durch zwei benachbarte Spannstifte
- Figur 7: einen Querschnitt durch einen Spannstift mit einer Einstellvorrichtung,
- Figur 8: einen Querschnitt durch einen Spannstift mit einem Wegsensor,
- Figur 9: eine Draufsicht auf einen Spannbacken der erfindungsgemäßen Haltevorrichtung in einer weiteren Ausführungsform,
- Figur 10: einen Längsschnitt durch eine Anordnung unterschiedlich langer Spannstifte,
- Figur 11: eine Seitenansicht auf ein Paar von Spannbacken mit Spannstiften bei einer weiteren Ausführungsform der erfindungsgemäßen Haltevorrichtung,
- Figur 12: eine Seitenansicht eines Spannbackens mit Details der Fixier- und der Vorschubeinrichtung in einer Ausführungsform der erfindungsgemäßen Haltevorrichtung,
- Figur 13: eine Ansicht von oben auf einen zweiteiligen Spannbacken mit Details der Fixier- und der Vorschubeinrichtung in einer gegenüber Figur 12 symmetrisch ergänzten Ausführungsform der Haltevorrichtung und
- Figur 14: ein Prinzipschaubild zu der Fixier- und der Vorschubeinrichtung in einer abgewandelten Ausführungsform der Haltevorrichtung gemäß Figur 13.

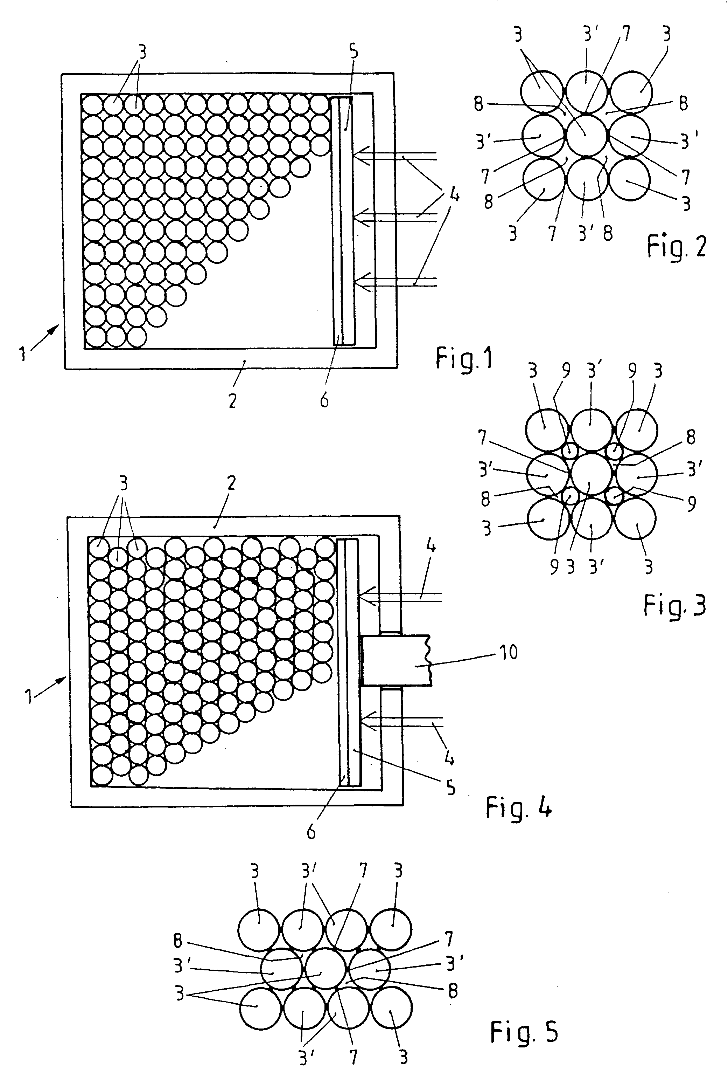

Ein in Figur 1 dargestellter Spannbacken 1 einer Haltevorrichtung weist einen rechteckigen Rahmen 2 und darin angeordnet eine Vielzahl von Spannstiften 3 auf. Die Spannstifte 3 werden durch eine seitliche, d.h. senkrecht zu ihrer Hauperstreckungsrichtung verlaufende Fixierkraft 4 aneinander und an den Rahmen 2 gedrückt und dadurch gegenüber dem Rahmen 2 fixiert. Die seitliche Fixierkraft 4 wird über eine Wand 5 des Rahmens 2 auf die Spannstifte 3 übertragen. Die Wand 5 ist mit einem den Spannstiften 3 zugekehrten elastisch verformbaren, aber relativ steifen Belag 6 versehen, um die Fixierkraft 4 über die gesamte Breite der Wand 5 gleichmäßig auf die Spannstifte 3 zu verteilen. Entgegen der Darstellung in Figur 1 füllen die Spannstifte 3 den freien Querschnitt des Rahmens 2 bis zu der Wand 5 aus. Wenn die über die Wand 5 einwirkende seitliche Fixierkraft 4 aufgehoben wird, sind die Spannstifte 3 einzeln und gemeinsam senkrecht zur Zeichenebene gegenüber dem Rahmen 2 einzeln verschiebbar. Auf diese Weise kann die Gesamtheit der Spannstifte 3 an ein dreidimensional geformtes Werkstück angepaßt werden. Wenn diese Anpassung durch das Aufbringen der Fixierkraft 4 fixiert wird, wird quasi ein Negativabdruck des Werkstücks erstellt.

Gemäß Figur 1 sind die Spannstifte 3 innerhalb des Rahmens 2 in einer quadratischen Packung angeordnet. Diese ist vergrößert in Figur 2 wiedergegeben. In einer quadratischen Packung sind einem Spannstift 3 jeweils vier weitere Spannstifte 3' unmittelbar benachbart. Die Kontaktbereiche 7 zu den benachbarten Spannstiften 3' sind linienförmig und verlaufen senkrecht zur Zeichenebene. Zwischen den benachbarten Spannstiften 3' um dem Spannstift 3 verbleiben Freiräume 8, die bei einer quadratischen Packung der Spannstifte relativ groß sind. Diese Freiräume 8 werden bewußt belassen, weil Verunreinigungen, die zwischen die Spannstifte 3 eintreten können, seitlich in diese Freiräume 8 verdrängbar sind. In die Freiräume 8 verdrängte Verunreinigungen behindern nicht die vollständige Fixierung der Spannstifte 3 aneinander und an dem Rahmen 2. Die Verdrängung der Verunreinigungen aus den Kontaktbereichen 7 in die Freiräume 8 erfolgt automatischen, weil eine in dem Kontaktbereich 7 befindliche Verunreinigung ein labiles Gleichgewicht beim Aneinanderdrücken benachbarter Spannstifte 3, 3' bedeutet. Bereits geringe Lageänderungen der aneinander anliegenden Spannstifte 3, 3' drücken die Verunreinigung seitlich in einen der benachbarten Freiräume 8.

In den Freiräumen 8 können Füllstifte 9 angeordnet werden, um die Spannstifte 3 stärker seitlich zu führen. Dies ist in Figur 3 skizziert. Die Füllstifte 9 weisen einen geringeren Durchmesser als die Spannstifte 3 auf und können auch kürzer als diese ausgebildet sein. Die Füllstifte 9 füllen die Freiräume 8 nicht vollständig aus, so daß ausreichend Raum zum Verdrängen von Verunreinigungen verbleibt.

Ausreichend Raum zum Verdrängen von Verunreinigungen ist auch bei der Ausführungsform des Spannbackens 1 gemäß Figur 4 gegeben, bei der die Spannstifte 3 in dem Rahmen 2 in einer dichtesten Packung angeordnet sind. Darüberhinaus unterscheidet sich die Ausführungsform des Spannbackens 1 gemäß Figur 4 von derjenigen gemäß Figur 1 darin, daß der freie Querschnitt des Rahmens 2 quer zu der Richtung der Fixierkraft 4 in Richtung der Fixierkraft 4 abnimmt, wodurch die Spannstifte 3 in verstärktem Maße in dieser Richtung verspannt und damit fixiert werden. Eine Verspannung in dieser Richtung ergibt sich jedoch auch gemäß Figur 1, weil die einzelnen Reihen der Spannstifte 3 bei Belastung mit der Fixierkraft 4 seitlich auszuweichen versuchen. Weiterhin ist in Figur 4 ein Druckstück 10 zum Übertragen der Fixierkraft 4 auf die Wand 5 des Rahmens 2 eingezeichnet. Entgegen der Darstellung in Figur 4 füllen auch dort die Spannstifte 3 den freien Querschnitt des Rahmens 2 bis zu der Spannplatte 5 aus.

Die dichte Packung der Spannstifte 3 gemäß Figur 4 ist in Figur 5 vergrößert dargestellt. Einem mittleren Spannstift 3 sind dabei sechs weitere Spannstifte 3' als nächste Nachbarn zugeordnet. Die Kontaktbereiche 7 der Spannstifte 3 sind wiederum linienförmig. Die Freiräume 8 zwischen den Spannstiften sind jedoch deutlich kleiner als bei der quadratischen Packung gemäß Figur 2. So kann das Volumen der Freiräume 8 schneller durch Verunreinigungen aufgefüllt werden. Gleichzeitig ist durch die mehrfache Abstützung der Spannstifte durch ihre Nachbarn 3' eine weniger große Tendenz zum Verdrängen von Verunreinigungen aus den Kontaktbereichen 7 in die Freiräume 8 gegeben. Im Ergebnis verbleibt eine jedoch nur geringe Wahrscheinlichkeit, daß durch das Eindringen von Verunreinigungen zwischen die Spannstifte 3 die Fixierkraft 4 nicht gleichmäßig über alle Spannstifte 3 abgetragen wird und dabei deren Fixierung gegenüber dem Rahmen 2 führt, sondern daß einzelne Spannstifte 3 gerade nicht ausreichend fixiert werden.

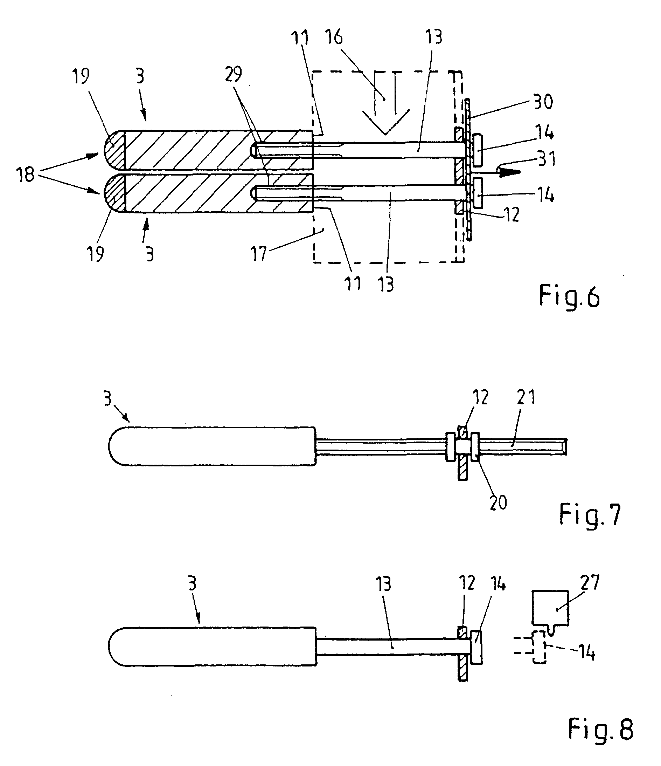

In Figur 6 ist anhand von zwei benachbarten, im Längsschnitt dargestellten Spannstiften 3 skizziert, wie diese auch bei aufgehobener Fixierung durch die Fixierkraft 4 an dem hier nicht dargestellten Rahmen 2 gesichert und gleichzeitig auf ein zu haltendes Werkstück 25 hin beaufschlagt werden, um sich an dieses anzulegen. Die Spannstifte 3 sind jeweils aus Zylinderstiften ausgebildet, in deren rückwärtige Gewindebohrungen 29 Rückhaltestangen 13 durch eine durchbrochene Rückhalteplatte 12 hindurch eingeschraubt sind. Rückwärtig der Rückhalteplatte 12 weisen die Rückhaltestangen 13 Rückhaltebunde 14 auf, die nicht durch die Rückhalteplatte 12 hindurchtreten können. Damit ist die Sicherung der Spannstifte 3 der Rückhalteplatte 12 bewirkt. Die Rückhalteplatte 12 ist ortsfest gegenüber dem Rahmen 2 angeordnet. Zwischen den Spannstiften 3 und der Rückhalteplatte 12 ist ein beispielsweise mit einem Druckmedium 16 beaufschlagbarer Druckraum 17 vorgesehen. Das Druckmedium 16, beispielsweise Druckluft oder auch ein flüssiges Kühlmittel, in dem Druckraum 17 beaufschlagt die Spannstifte 3 von über radiale Absätze 11 der Spannstifte von der Rückhalteplatte 12 weg. Weiterhin tritt ein Teil des Druckmediums 16 durch die Freiräume 8 zwischen den Spannstiften 3 aus dem Druckraum 17 aus und reinigt dabei die Freiräume 8 von Verunreinigungen. Darüberhinaus kann das durch die Freiräume 8 hindurchtretende Druckmedium 16 auch genutzt werden, um ein Werkstück laufend zu reinigen und zu kühlen. Die Spitzen 18 der Spannstifte 3 sind aus einem weichen, elastisch verformbaren Kunststoff 19 ausgebildet. Eine zusätzliche Rückholplatte 30 ist zwischen der Rückhalteplatte 12 und den Rückhaltebunden 14 angeordnet. Beim Zurückziehen der Rückholplatte 30 in Richtung eines Pfeils 31 beispielsweise mit einer hier nicht dargestellten hydraulischen oder pneumatischen Einrichtung werden alle Spannstifte 3 zurückgezogen. So kann ein Werkstück, ohne den gesamten Spannbacken zu verfahren, freigegeben und gewechselt werden. Das neue Werkstück wird von den Spannstiften 3 erfaßt, nachdem die Rückholplatte entgegen dem Pfeil 31 wieder vorgeschoben worden ist.

In Figur 7 ist ein Spannstift 3 wiedergegeben, der weder frei noch gegen Federdruck gegenüber der Rückhalteplatte 12 verschiebbar ist. Vielmehr ist hinten an dem Spannstift 3 gemäß Figur 7 eine Gewindestange 21 befestigt, auf der eine Gewindebuchse 20 sitzt, welche bezüglich der Rückhalteplatte 12 drehbar, aber ortsfest ist. Durch Verdrehen der Gewindebuchse 20 wird der Spannstift 3 gemäß Figur 7 relativ zu dem Rahmen 2 in eine definierte Relativlage verschoben. Der Spannstift 3 kann so einen Anschlag für das Heranfahren des Spannbackens 1 an ein Werkstück ausbilden.

Auch in Figur 8 ist ein Spannstift 3 dargestellt, mit dem die Relativlage eines Werkstücks zu dem Spannbacken 1 erfaßbar ist. Zur Erfassung der Lage des Werkstücks ist hinter der Rückhalteplatte 12 ein Mikroschalter 27 angeordnet, der durch den Rückhaltebund 14 betätigt wird, wenn der Spannstift 3 um ein gewisses Maß auf die Rückhalteplatte 12 hin verschoben wurde. Statt des Mikroschalters 27 kann auch ein Wegaufnehmer vorgesehen sein, der die genaue Relativlage des Spannstifts 3 gegenüber der Rückhalteplatte 12 erfaßt.

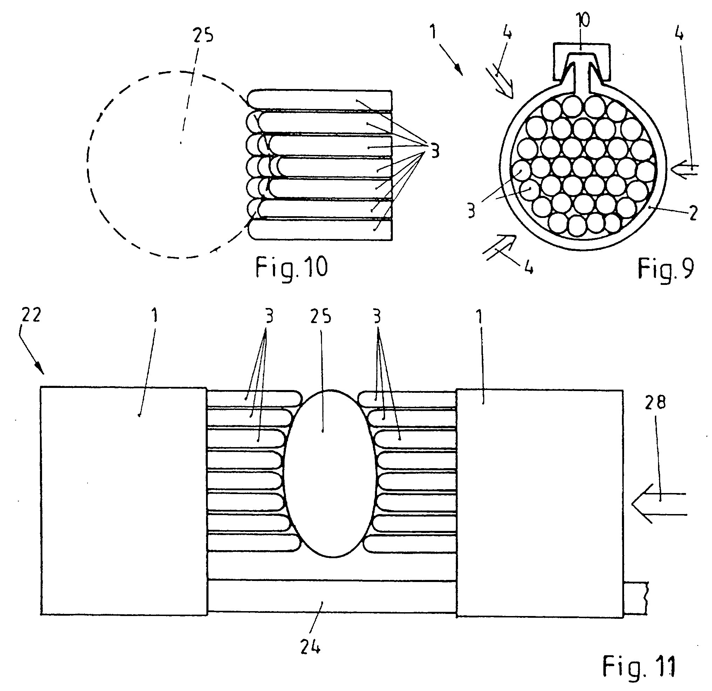

In Figur 9 ist eine Ausführungsform des Spannbackens 1 mit einem rundem, geschlitzten Rahmen 2 wiedergegeben. Die Fixierkraft 4 zum Fixieren der Spannstifte 3 in dem Rahmen 2 wird dabei durch ein die freien Enden des Rahmens zusammendrückendes Druckstück 10 aufgebracht. Die resultierende Fixierkraft 4 verläuft radial zum Mittelpunkt des Rahmen 2.

In Figur 10 ist ein Bündel von Spannstiften 3 im Querschnitt wiedergegeben, wie es in dem Rahmen 2 gemäß Figur 9 angeordnet sein könnte. Die Spannstifte 3 des Bündels sind von unterschiedlicher Länge und damit beispielsweise auf das Halten eines runden Werkstücks 25 abgestimmt. Von solch einem runden Werkstück würden die Spannstifte in der Mitte des in Figur 10 dargestellten Bündels bei gleicher Länge aller Spannstifte 3 deutlich stärker verschoben würden, als die äußeren Spannstifte 3. Dies wird durch die unterschiedlichen Längen der Spannstifte 3 gezielt kompensiert.

Figur 11 skizziert eine Haltevorrichtung 22 mit zwei Spannbacken 1. Dabei ist in der Figur der linke Spannbacken 1 als ortsfester Spannbacken und der rechte Spannbacken 1 als verfahrbarer und mit einer Spannkraft 28 auf den linken Spannbacken 23 hin beaufschlagbarer Spannbacken 23 ausgebildet. Zwischen den Spannbacken 23 ist eine Führungsschiene 24 vorgesehen. In der Darstellung gemäß Figur 11 wird ein eiförmiges Werkstück 25 von der Haltevorrichtung 22 gehalten, wobei die Spannstifte 3 beider Spannbacken 1 die äußeren Konturen des Werkstücks 25 genau abgreifen. So wird im Ergebnis nicht nur eine viel größere Haltefläche im Vergleich zu ebenen Spannbacken sondern auch ein Formschluß zwischen den Spannbacken 23 und dem Werkstück 25 erzielt, und die Lage des Werkstücks 25 wird mit vergleichsweise geringen auf seine Oberfläche einwirkenden Kräften vollständig definiert.

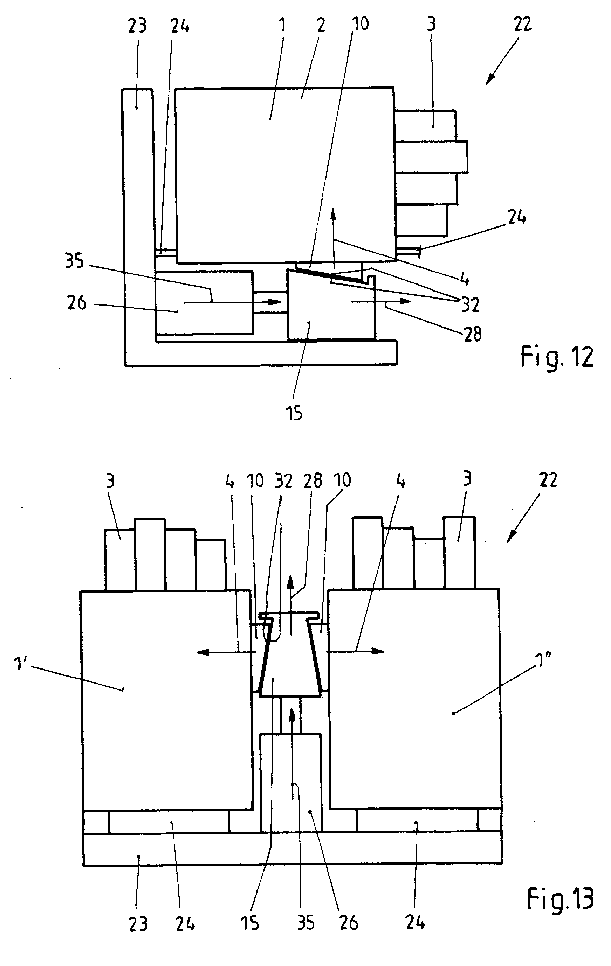

Der in Figur 12 dargestellte Spannbacken 1 wird durch Führungsschienen 24 gegenüber einer Basis 23 in Richtung der Spannkraft 28 linear geführt. Zum Vorschieben des Spannbackens 1 in Richtung der Spannkraft 28 ist ein translatorisches Betätigungselement 26 vorgesehen, bei dem es sich beispielsweise um einen hydraulischen oder pneumatischen doppelt wirkenden Zylinder handelt. Das Betätigungselement 26 wirkt über einen Steuerkopf 15 auf das Druckstück 10 der Fixiereinrichtung für die Haltestifte 3 und damit gleichzeitig auf den gesamten Spannbacken 1 ein. Zwischen dem Steuerkopf 15 und dem Druckstück 10 sind dabei Steuerflächen 32 vorgesehen, die schräg zu dem translatorischen Betätigungselement 26 und einer von diesem originär aufgebrachten Kraft 35 verlaufen. Durch die schräge Ausrichtung der Steuerflächen 32 wird die Kraft 35 des Betätigungselements 26 neben der Spannkraft 28 in die Fixierkraft 4 aufgespalten. Die Gegenkraft zu der Fixierkraft 4 wird gemäß Figur 12 von der Basis 23 aufgebracht, die den Steuerkopf 15 nach unten abstützt. Die Aufteilung der Kraft 35 ergibt folgendes Verhalten beim Spannen mit dem Spannbacken 1: Zunächst kann der Spannbacken ohne Kontakt zum Werkstück noch ungehindert von dem Betätigungselement 26 vorgeschoben werden, es baut sich also weder eine nennenswerte Spannkraft 28 noch eine Fixierkraft 4 auf. Die Spannstifte werden allenfalls seitlich soweit beaufschlagt, daß sie ihr seitliches Spiel verlieren. Sie sind aber noch ohne weiteres in Richtung ihrer Haupterstreckungsrichtung verschieblich. Sobald die Spannstifte 3 auf das Werkstück auftreffen und gegen ihre Rückstellkraft in den Spannbacken 1 eingedrückt werden, baut sich die Spannkraft 28 auf. Durch die Anordnung der Steuerflächen 32 ergibt sich gleichzeitig eine noch größere Fixierkraft 4, so daß die Spannstifte, kaum daß sie an dem Werkstück anliegen, aneinander fixiert werden. Dabei wird die Kraft 35 des Betätigungselements 26 im wesentlichen seitlich von den Spannstiften aufgenommen und kann so nicht zu einer Beschädigung der Oberfläche des Werkstücks führen. Die in Figur 12 dargestellte hakenförmige Ausbildung des Steuerkopfs 15 stellt sicher, daß das Betätigungselement 26 den Spannbacken 1 auch zurückziehen kann. Es ist aber auch möglich, daß durch Entlastung des Betätigungselements 26 zunächst nur die Fixierung der Spannstifte aufgehoben wird.

Bei der Anordnung der Haltevorrichtung 22 gemäß Figur 12 muß die Gegenkraft zu der Spannkraft 4 von dem Grundkörper 23 aufgenommen werden. Bei der Ausführungsform gemäß Figur 13 wird auch die Gegenkraft zum Fixieren von Spannstiften 3 genutzt. Hierzu ist der Spannbacken 1 zweiteilig ausgebildet, wobei zwei Teilbacken 1' und 1'' symmetrisch zu dem translatorischen Betätigungselement 26 angeordnet sind. Entsprechend ist auch der Steuerkopf 15 symmetrisch ausgebildet und beaufschlagt die Druckstücke 10 der beiden Teilbacken 1' und 1'' mit entgegengesetzten und einander aufhebenden Fixierkräften 4. So ist keine Abstützung des Steuerkopfs 15 quer zu der Richtung der Kraft 35 des translatorischen Betätigungselements 26 erforderlich.

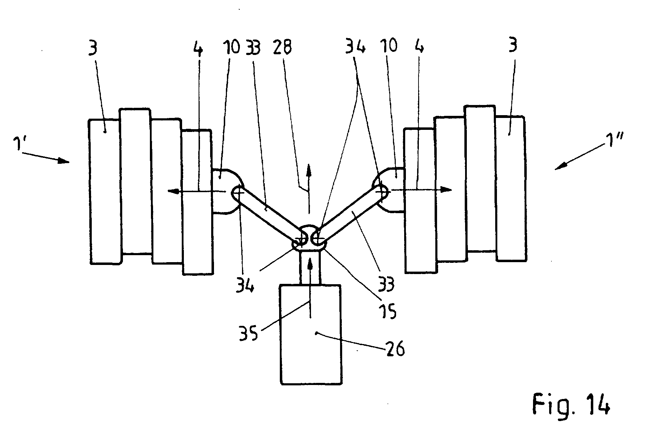

Diese Notwendigkeit ist auch nicht bei der Anordnung gemäß Figur 14 erforderlich, in der nur das translatorische Betätigungselement 26, die Druckstücke 10 von zwei Fixiereinrichtungen für Spannstifte 3 von zwei Teilbacken 1' und 1'' sowie die zwischen dem Betätigungselement 26 und den Druckstücken 10 vorgesehenen Getriebemitteln dargestellt sind. Bei den Getriebemitteln handelt es sich um Lenkerarme 33, die in symmetrischer Anordnung um Lenkerachsen 34 verschwenkbar an dem Steuerkopf 15 und den beiden Druckstücken 10 gelagert sind. Die Lenkerarme 33 setzen wie die Steuerflächen 32 gemäß den Figuren 13 und 14 die Kraft 35 des translatorischen Betätigungselements 26 in die parallel zu der Kraft 35 verlaufende Spannkraft 28 und die senkrecht dazu verlaufenden Fixierkräfte 4 um. Die Lagerung der Lenkerarme 33 sowohl an dem Steuerkopf 15 als auch an den Druckstücken 10 ermöglicht auch ein Zurückziehen der Spannbacken 11 durch Zusammenziehen des Betätigungselements 26. Als Vorteil der Anordnung gemäß Figur 14 gegenüber der Anordnung gemäß den Figuren 12 und 13 ist anzusehen, daß durch die kniegelenkartige Anordnung der Lenkerarme 33 eine Veränderung des Verhältnisses der Spannkraft 28 zu den Fixierkräften 4 erreicht werden kann. Wenn die Druckstücke 10 mit anwachsenden Fixierkräften 4 seitlich etwas ausweichen, wächst der Winkel zwischen den Lenkerarmen 33 an. In der Folge nimmt der Anteil der Spannkraft 28 zugunsten der Fixierkräfte 4 ab. Diese dynamische Kraftverteilung ist optimal.

### BEZUGSZEICHENLISTE

- 1 -: Spannbacken
- 2 -: Rahmen
- 3 -: Spannstift
- 4 -: Fixierkraft
- 5 -: Wand
- 6 -: Belag
- 7 -: Kontaktbereich
- 8 -: Freiraum
- 9 -: Füllstift
- 10 -: Druckstück
- 11 -: Absatz
- 12 -: Rückhalteplatte
- 13 -: Rückhaltestange
- 14 -: Rückhaltebund
- 15 -: Steuerkopf
- 16 -: Druckmedium
- 17 -: Druckraum
- 18 -: Spitze
- 19 -: Kunststoff
- 20 -: Gewindebuchse
- 21 -: Gewindestange
- 22 -: Haltevorrichtung
- 23 -: Basis
- 24 -: Führungsschiene
- 25 -: Werkstück
- 26 -: Betätigungselement
- 27 -: Mikroschalter
- 28 -: Spannkraft
- 29 -: Gewindebohrung
- 30 -: Rückholplatte
- 31 -: Pfeil
- 32 -: Steuerfläche
- 33 -: Lenkerarm
- 34 -: Lenkerachse
- 35 -: Kraft

## Patentansprüche

1. Haltevorrichtung für Werkstücke, mit einem Spannbacken (1), der eine Vielzahl von parallel zueinander ausgerichteten, seitlich aneinander anliegenden und in ihrer Haupterstreckungsrichtung einzeln verschiebbaren Spannstiften (3), einen die Spannstifte (3) seitlich umgreifenden Rahmen (2) und eine Fixiereinrichtung zum Fixieren der Spannstifte (3) gegenüber dem Rahmen (2) durch eine seitliche Fixierkraft (4) aufweist, wobei an der dem Werkstück abgewandten Rückseite der Spannstifte (3) ein Druckraum (17) vorgesehen ist, wobei durch Freiräume (8) zwischen den nicht fixierten Spannstiften (3) Druckmedium (16) aus dem Druckraum (17) austreten kann, **dadurch gekennzeichnet, dass** die Spannstifte (3) im Querschnitt kreisförmig sind, so dass sie über linienförmige Kontaktbereiche (7) an einander anliegen, wobei die Freiräume (8) seitlich neben den Kontaktbereichen (7) auch bei mit der Fixiereinrichtung aneinander fixierten Spannstiften (3) zwischen den benachbarten Spannstifen (3) verbleiben oder zumindest von jeweils einem im Querschnitt runden Füllstift nicht vollständig ausgefüllt werden, so dass der Druckraum (17) auch bei mit der Fixiereinrichtung aneinander fixierten Spannstiften (3) soweit offen ist, dass Druckmedium (16) aus dem Druckraum (17) durch die Freiräume (8) zwischen den Spannstiften (3) austreten kann, und dass durch die Freiräume (8) zwischen den Spannstiften (3) austretendes Druckmedium bis zu dem jeweils gespannten Werkstück (25) gelangt, um dieses zu kühlen.

2. Haltevorrichtung nach Anspruch 1, **dadurch gekennzeichnet, daß** das Druckmedium (16) in dem offenen Druckraum (17) Druckluft ist.

3. Haltevorrichtung nach Anspruch 1, **dadurch gekennzeichnet, daß** das Druckmedium (16) in dem offenen Druckraum (17) ein Kühlmedium ist.

4. Haltevorrichtung nach einem der Ansprüche 1 bis 3, **dadurch gekennzeichnet, daß** die Spannstifte (3) in dem Druckraum (17) einen radialen Absatz (11) aufweisen, so daß das Druckmedium (16) die Spannstifte (3) auf das Werkstück (25) hin beaufschlagt.

5. Haltevorrichtung nach einem der Ansprüche 1 bis 4, wobei eine Spanneinrichtung zum Aufbringen einer auf das Werkstück gerichteten Spannkraft auf den Spannbacken vorgesehen ist, **dadurch gekennzeichnet, daß** ein gemeinsames translatorisches Betätigungselement (26) für die Fixiereinrichtung und die Vorschubeinrichtung vorgesehen ist, wobei Getriebemittel (32, 33) die von dem Betätigungselement (26) ausgeübte Kraft (35) in die Fixierkraft (4) und die Spannkraft (28) übersetzen.

6. Haltevorrichtung nach Anspruch 5, **dadurch gekennzeichnet, daß** die Getriebemittel (32, 33) so ausgebildet sind, daß die Fixierkraft (4) größer ist als die Spannkraft (28).

7. Haltevorrichtung nach Anspruch 5 oder 6, **dadurch gekennzeichnet, daß** die Getriebemittel schräg zu dem translatorischen Betätigungselement (26) ausgerichtete Gleitflächen (32) oder Lenkerarme (33) aufweisen.

8. Haltevorrichtung nach einem der Ansprüche 5 bis 7, **dadurch gekennzeichnet, daß** der Spannbacken (1) in zwei symmetrisch zu dem translatorischen Betätigungselement (26) angeordnete Teilbacken (1' und 1") mit jeweils einem die Spannstifte (3) seitlich umgreifenden Rahmen (2) unterteilt ist.

9. Haltevorrichtung nach einem der Ansprüche 1 bis 8, **dadurch gekennzeichnet, daß** der Rahmen (2) rechteckige Innenabmessungen aufweist, wobei die Fixiereinrichtung eine Wand (5) des Rahmens (2), die gegenüber dem restlichen Rahmen (2) verschieblich ist, mit der Fixierkraft (4) beaufschlagt.

10. Haltevorrichtung nach einem der Ansprüche 1 bis 9, **dadurch gekennzeichnet, daß** die Spannstifte (3) in einer dichtesten Packung angeordnet sind.

## Claims

1. A holding device for work pieces comprising a clamping jaw (1) including a plurality of clamping pins (3) which are arranged parallel to each other, which are laterally abutting against each other and which are separately movable in their direction of main extension, a frame (2) laterally encompassing the clamping pins (3), and a fixation device for fixing the clamping pins (3) with regard to the frame (2) by means of a lateral fixing force (4), a pressure chamber (17) being provided at the backside of the clamping pins (3) facing away from the work piece, pressure medium (16) being able to emerge from the pressure chamber (17) through clearances (8) between the non fixed clamping pins (3), **characterized in that** the clamping pins (3) have a circular cross section so that they are abutting against each other via line shaped contact areas (7), wherein the clearances (8) laterally adjacent to the contact areas (7), even with clamping pins (3) fixed to each other by the fixing device, remain between adjacent clamping pins (3), or are each at least not totally filled by a filling pin of circular cross section so that the pressure chamber (17), even with clamping pins (3) fixed to each other by the fixing device, is open to such an extent that pressure medium (16) from the pressure chamber (17) can emerge through the clearances (8) between the clamping pins (3), and that the pressure medium emerging through the clearances (8) between the clamping pins (3) gets to the presently clamped work piece (25) for cooling it.

2. The holding device according to claim 1, **characterized in that** the pressure medium (6) in the open pressure chamber (17) is compressed air.

3. The holding device according to claim 1, **characterized in that** the pressure medium (16) in the open pressure chamber (17) is a coolant.

4. The holding device according to any of the claims 1 to 3, **characterized in that** the clamping pins (3) have a radial step (11) within the pressure chamber (17) so that the pressure medium (16) applies a force towards the work piece (25) onto the clamping pins (3).

5. The holding device according to any of the claims 1 to 4, a clamping mechanism being provided for applying a clamping force onto the clamping jaw directed towards the work piece, **characterized in that** a common translational operating element (26) being provided for the fixing mechanism and the fowarding mechanism, coupling means (32, 33) transforming the force (35) exerted by the operating element (26) into the fixing force (4) and the clamping force (28).

6. The holding device according to claim 5, **characterized in that** the coupling means (32, 33) are constructed in such a way that the fixing force (4) is higher than the clamping force (28).

7. The holding device according to claim 5 or 6, **characterized in that** the coupling means comprise sliding surfaces (32) or lever arms (33) which are inclined with regard to the translational operation element (26).

8. The holding device according to any of the claims 5 to 7, **characterized in that** the clamping jaw (1) is subdivided into two sectional jaws (1' and 1") which are symmetrically arranged with regard to the translational operating element (26) and which each have a frame (2) laterally encompassing the clamping pins (3).

9. The holding device according to any of the claims 1 to 8, **characterized in that** the frame (2) has rectangular inner dimensions, the fixing device applying the fixing force (4) to a wall (5) of the frame (2) which is movable with regard to the remainder of the frame (2).

10. The holding device according to any of the claims 1 to 9, **characterized in that** the clamping pins (3) are arranged in a close packing.

## Revendications

1. Dispositif de maintien de pièces, avec une mâchoire de serrage (1) qui comporte un grand nombre de doigts de serrage (3) orientés parallèlement les uns aux autres, s'appliquant latéralement les uns contre les autres, et pouvant coulisser individuellement dans la direction de leur étendue principale, un cadre (2) entourant latéralement les doigts de serrage (3) et un dispositif de fixation pour fixer les doigts de serrage (3) par rapport au cadre (2) par une force de fixation (4) latérale, sur le côté arrière des doigts de serrage (3), tourné à l'opposé de la pièce, étant prévue une chambre sous pression (17), un fluide sous pression (16) pouvant sortir de la chambre sous pression (17) par des espaces libres (8) entre les doigts de serrage (3) non fixés, **caractérisé en ce que** la section transversale des doigts de serrage (3) est de forme circulaire de sorte qu'ils s'appliquent les uns contre les autres sur des zones de contact (7) en forme de ligne, les espaces libres (8) restant entre les doigts de serrage (3) voisins, sur le côté des zones de contact (7), même lorsque les doigts de serrage (3) sont fixés les uns contre les autres au moyen du dispositif de fixation, ou au moins ils ne sont pas totalement remplis par un doigt de remplissage respectif, de section transversale circulaire, de sorte que la chambre sous pression (17) est suffisamment ouverte, même lorsque les doigts de serrage (3) sont fixés les uns contre les autres au moyen du dispositif de fixation, pour que le fluide sous pression (16) puisse sortir de la chambre sous pression (17) par les espaces libres (8) entre les doigts de serrage (3), et **en ce que** le fluide sous pression, sortant par les espaces libres (8) entre les doigts de serrage (3), parvient jusqu'à la pièce (25) serrée considérée, pour refroidir celle-ci.

2. Dispositif de maintien selon la revendication 1, **caractérisé en ce que** le fluide sous pression (16) dans la chambre sous pression (17) ouverte est de l'air comprimé.

3. Dispositif de maintien selon la revendication 1, **caractérisé en ce que** le fluide sous pression (16) dans la chambre sous pression (17) ouverte est un réfrigérant.

4. Dispositif de maintien selon l'une des revendications 1 à 3, **caractérisé en ce que** les doigts de serrage (3) dans la chambre sous pression (17) présentent un gradin radial (11), ce qui fait que le fluide sous pression (16) agit sur les doigts de serrage (3) vers la pièce (25).

5. Dispositif de maintien selon l'une des revendications 1 à 4, dans lequel est prévu un dispositif de serrage pour appliquer sur les mâchoires de serrage une force de serrage dirigée vers la pièce, **caractérisé en ce qu'**il est prévu un élément d'actionnement à translation (26) commun pour le dispositif de fixation et le dispositif d'avance, des moyens de transmission (32, 33) transformant la force (35) exercée par l'élément d'actionnement (26) en force de fixation (4) et force de serrage (28).

6. Dispositif de maintien selon la revendication 5, **caractérisé en ce que** les moyens de transmission (32, 33) sont conçus de manière que la force de fixation (4) soit supérieure à la force de serrage (28).

7. Dispositif de maintien selon la revendication 5 ou 6, **caractérisé en ce que** les moyens de transmission présentent des surfaces de glissement (32) ou bras oscillants (33) orientés obliquement vers l'élément d'actionnement à translation (26).

8. Dispositif de maintien selon l'une des revendications 5 à 7, **caractérisé en ce que** la mâchoire de serrage (1) est divisée en deux mâchoires partielles (1' et 1") disposées symétriquement par rapport à l'élément d'actionnement à translation (26), avec chacune un cadre (2) entourant latéralement les doigts de serrage (3).

9. Dispositif de maintien selon l'une des revendications 1 à 8, **caractérisé en ce que** le cadre (2) présente des dimensions intérieures rectangulaires, le dispositif de fixation exerçant la force de fixation (4) sur une paroi (5) du cadre (2), laquelle peut coulisser par rapport au reste du cadre (2).

10. Dispositif de maintien selon l'une des revendications 1 à 9, **caractérisé en ce que** les doigts de serrage (3) sont disposés en un paquet serré.
